# EUROPÄISCHE PATENTSCHRIFT

(11) **EP 0 496 285 B1**
(45) Veröffentlichungstag und Bekanntmachung des Hinweises auf die Patenterteilung: **17.05.1995**
(21) Anmeldenummer: 92100697.9
(22) Anmeldetag: 17.01.1992
(51) Int. Cl.: A01C 17/00

(54) **Schleuderstreuer**
Centrifugal spreader
Epandeur centrifuge

(30) Priorität: 22.01.1991 DE 4101682
(43) Veröffentlichungstag der Anmeldung: 29.07.1992
(73) Patentinhaber: RAUCH LANDMASCHINENFABRIK GMBH, D-76545 Sinzheim (DE)
(72) Erfinder: Rauch, Norbert, Dipl.-Ing., W-7573 Sinzheim (DE)
(74) Vertreter: Lichti, Heiner, Dipl.-Ing.

(56) Entgegenhaltungen:
- EP-A- 0 237 927
- EP-A- 0 385 236

## Beschreibung

Die Erfindung betrifft einen Schleuderstreuer für rieselfähiges Streugut, insbesondere Dünger, der von einem Schlepper aufgenommen und antriebsmäßig mit dessen Zapfwelle über eine Gelenkwelle verbunden ist, mit einem Rahmen, einem von diesem aufgenommenen Vorratsbehälter mit wenigstens zwei einstellbaren Ausläufen beiderseits der Fahrtrichtung und je einer darunter angeordneten Schleuderscheibe, wobei die Schleuderscheiben über einen gemeinsamen mechanischen Getriebezug gegensinnig von der Gelenkwelle angetrieben sind und der Getriebezug ein die Schleuderscheiben lagerndes Getriebegehäuse aufweist.

Bei derartigen Schleuderstreuern wird das zu verteilende Streugut aus dem Vorratsbehälter durch die einstellbaren Ausläufe unter Schwerkraft jeweils auf eine Schleuderscheibe aufgegeben. Die Schleuderscheiben werden durch den gemeinsamen Getriebezug bei gleicher Drehzahl entgegengesetzt angetrieben. Idealerweise wird durch diesen Aufbau ein zu beiden Seiten des Streuers symmetrisches Streubild erreicht, so daß beim Anschlußfahren durch Überlappung benachbarter Streubilder eine gleichmäßige Streugutverteilung gewährleistet ist.

Streubild und Arbeitsbreite lassen sich durch die Drehzahl der Scheiben, wie auch durch Anheben und/oder Neigen des Streuers beeinflussen. Auf diese Weise läßt sich auch das unterschiedliche Reibungsverhalten verschiedener Düngersorten (grob- oder feinkörnige, unregelmäßige oder gleichmäßige Kornform) auf der Schleuderscheibe und damit deren unterschiedliche Beschleunigung, wie auch deren unterschiedliches Flugverhalten in Grenzen berücksichtigen. Im allgemeinen trägt man aber verschiedenen Düngersorten durch Verwendung verschiedener, austauschbarer Schleuderscheiben oder durch Scheiben mit verstellbaren Wurfflügeln Rechnung. Gleiches gilt für das Grenzstreuen, bei dem die der Feldgrenze zugekehrte Schleuderscheibe ein völlig anderes, nämlich steilflankiges Streubild, als die andere Schleuderscheibe aufweisen muß.

Um ein allzu häufiges Nachfüllen des Vorratsbehälters mit Streugut zu vermeiden und auch große Streubreiten zu ermöglichen, werden diese Streuer mit möglichst großvolumigen Vorratsbehältern ausgestattet. Dabei wird auf eine größtmöglichste Ausnutzung der zulässigen Fahrzeugbreite geachtet, um bei großem Behältervolumen eine geringe Baulänge und damit günstige Schwerpunktlage nahe des Schleppers zu erreichen. Ein Neigen des Streuers zur Veränderung des Streubildes hat den Nachteil, daß das Nutzvolumen des Behälters nicht mehr voll ausgenutzt werden kann, zumal dabei noch die beim Fahren auftretenden Beschleunigungs- und Verzögerungskräfte und die dadurch eintretende Streugutverlagerung berücksichtigt werden muß. Eine solche Veränderung der Arbeitsbreite und Anpassung an verschiedene Düngersorten steht dem Wunsch, Streuer mit großem Nutzinhalt zu erhalten, direkt entgegen. Weiter sind dem Anheben und Neigen Grenzen gesetzt, um die Gelenkwelle nicht zu sehr abzuknicken.

Es ist bei einem Düngerstreuer bekannt (US 2 594 084), neben einer kippbaren Lagerung des die Schleuderscheiben tragenden Rahmens in einer Vertikalebene den Rahmen quer zur Fahrtrichtung in einer Horizontalebene zu verlagern, doch dient diese Maßnahme nur der Anpassung an die jeweils vorhandenen Anbaumaße am Traktor, während das Streubild ausschließlich durch das Verkippen des Rahmens beeinflußt wird. Eine weitere Verlegung der Scheiben gegeneinander dient dem Spannen der Scheiben antreibenden Treibriemens.

Schließlich ist es bei einem Strohstreuer bekannt (US 1 625 353) das von einem Mähdrescher ausgetragene Stroh mittels eines Flügelrades zu verteilen und den Rahmen dieses Flügelrades in Fahrtrichtung zu verstellen, damit das Stroh unabhängig von den Anbaumaßen des vorgeschalteten Mähdreschers an einer geeigneten Stelle auf die umlaufenden Flügel trifft. Eine Veränderung des Streubildes ist mit dieser Ausbildung nicht oder allenfalls nur begrenzt möglich, und spielt im übrigen bei Strohstreuern auch keine Rolle.

Der Erfindung liegt die Aufgabe zugrunde, einen Schleuderstreuer des eingangs genannten Aufbaus so auszubilden, daß eine besonders einfache und genaue Veränderung des Streubildes ohne Anheben und/oder Neigen des Streuers, insbesondere bei Streuern mit weit auseinander liegenden Schleuderscheiben, möglich ist.

Diese Aufgabe wird dadurch gelöst, daß das Getriebegehäuse in einer Horizontalebene frei bewegbar am Rahmen geführt ist, und daß zur Einstellung des die Relativlage zwischen jedem Auslauf und der ihr zugeordneten Schleuderscheibe bestimmenden Aufgabepunktes zwei jeweils am Rahmen und am Getriebegehäuse an unterschiedlichen Stellen angreifende Stellglieder und zumindest ein Begrenzungselement vorgesehen sind.

Die erfindungsgemäße Ausbildung ermöglicht eine einfache und genaue Veränderung des Aufgabepunktes an jeder Schleuderscheibe, was eine entsprechende Veränderung des Streubildes zur Folge hat, da durch eine radiale und/oder angulare Veränderung des Aufgabepunktes die Verweilzeit des Streugutes auf den Scheiben, der Abflugpunkt und die Abfluggeschwindigkeit der Streugutpartikel und damit das Streubild und -in geringerem Umfang- die Streubreite beeinflußt werden können. In Kombination mit einer Variation der Scheibendrehzahl läßt sich die Streubreite noch nachhaltiger beeinflussen. Gleichermaßen läßt sich auf diese Weise das unterschiedliche Verhalten verschiedener Streugüter auf der Schleuderscheibe und beim Flug berücksichtigen. Es entfällt ein Anheben und/oder Neigen des Streuers zur Veränderung der Arbeitsbreite bzw. Anpassung an verschiedene Streugüter. Die funktionelle Trennung der Führung des Getriebegehäuses durch den Rahmen, die eine freie Beweglichkeit des Getriebegehäuses in einer Horizontalebene gestattet, und die Fixierung des Getriebegehäuses in der Horizontalebene durch die Stellglieder und wenigstens ein Begrenzungselement realisiert eine konstruktiv besonders einfache Ausbildung, die insbesondere für Getriebe großer Quererstreckung bei weit auseinander liegenden Schleuderscheiben geeignet ist. Das Begrenzungselement kann beispielsweise als ein Zapfen am Getriebegehäuse, der mit einem Langloch des Rahmens zusammenwirkt, ausgebildet sein. Als Stellglieder sind Gewindespindeln, zahnstangenartige Eingriffe, Hydraulikzylinder oder dergleichen verwendbar. Wichtig ist, daß der Aufgabepunkt für jede Schleuderscheibe exakt einstellbar ist, um ein symmetrisches Streubild auf beiden Seiten bezüglich der Fahrtrichtung und somit beim Überlappen durch das Anschlußfahren eine gleichmäßige Verteilung auf dem Boden zu erhalten.

Eine einfache Einstellung des Schleuderstreuers auf verschiedene Arbeitsbreiten ist auch dadurch möglich, daß wenigstens zwei Paar von Schleuderscheiben zur Veränderung der Arbeitsbreite vorgesehen sind. Zudem weisen die Schleuderscheiben oftmals Wurfflügel auf, welche verstellbar sind und einer Anpassung an verschiedene Streugüter und/oder Arbeitsbreiten dienen.

Eine bevorzugte Ausführung der Erfindung zeichnet sich dadurch aus, daß der Rahmen das Getriebegehäuse führende Abschnitte aufweist, die zwischen den Schleuderscheiben angeordnet sind. Dies ermöglicht insbesondere bei weit auseinander liegenden Schleuderscheiben eine schmale und dementsprechend gewichtssparende Konstruktion des Rahmens, da sich sonst der Rahmen bis über die Streuscheiben hinaus in Querrichtung erstrecken müßte. Weiterhin wird erreicht, daß im Abwurfbereich einer Schleuderscheibe keine Rahmenteile vorhanden sind.

Bevorzugt ist vorgesehen, daß die Abschnitte zwei parallele, etwa in Fahrtrichtung verlaufende Führungen bilden. Die parallelen Führungen gewährleisten einerseits in jeder Lage des Getriebes immer mit gleichem Abstand wirkende Angriffspunkte, andererseits die Möglichkeit, den Rahmen in einfacher Weise so auszubilden, daß eine gleichmäßige Abstützung des Vorratsbehälters erreicht wird.

Dadurch, daß die das Getriebegehäuse führenden Abschnitte von unteren Schenkeln des Rahmens gebildet sind, wird eine sehr geringe Bauhöhe des Rahmens im Bereich der Lagerung des Getriebegehäuses realisiert. Dies erleichtert die Ausbildung großvolumiger Vorratsbehälter, da bei vorgegebener Gesamthöhe des Schleuderstreuers eine große Bauhöhe des Vorratsbehälters ermöglicht wird.

Um eine spielfreie Lagerung des Getriebegehäuses in der Horizontalebene zu gewährleisten, ist vorgesehen, daß die Führungen quer zur Führungsebene vorgespannt sind. Dies kann unter anderem dadurch realisiert werden, daß entsprechende, gegebenenfalls gewölbte Gleitflächen zwischen den Führungen und dem Getriebegehäuse vorgesehen sind.

In besonders bevorzugter Ausführung ist vorgesehen, daß das Getriebegehäuse mittels der Stellglieder im wesentlichen in Fahrtrichtung einstellbar und mittels des Begrenzungselementes quer dazu festgelegt ist. Hierdurch wird eine Verschiebung des Getriebegehäuses quer zur Fahrtrichtung, die ein unsymmetrisches Streubild zur Folge hätte, verhindert.

Eine vorteilhafte Ausgestaltung zeichnet sich dadurch aus, daß die Stellglieder jeweils im Bereich einer Schleuderscheibe am Getriebegehäuse angreifen. Dies gestattet aufgrund der unmittelbaren Einwirkung der Stellkraft in Aufgabepunktnähe eine sehr präzise Einstellung des Aufgabepunktes für jede Schleuderscheibe. Hier ist eine Fehlerminimierung wichtig, da schon geringe Abweichungen des Aufgabepunktes von der Soll-Lage beträchtliche Veränderungen des Streubildes und entsprechende Fehler in der Streugutverteilung zur Folge haben.

Es ist zweckmäßigerweise vorgesehen, daß die Stellglieder einen Winkel von maximal 45° zur Fahrtrichtung einnehmen. Hierdurch wird erreicht, daß die Stellglieder möglichst direkt auf die Verschiebung des Getriebegehäuses in Fahrtrichtung wirken, um eine Vergrößerung des durch Einstelltoleranzen bedingten Fehlers zu vermeiden.

Um eine optimale Einstellmöglichkeit zu bieten, sind die Stellglieder stufenlos einstellbar.

Eine insbesondere bei manueller Einstellung bevorzugte Ausbildung sieht vor, daß die Stellglieder unabhängig voneinander einstellbar sind. Somit können die beiden Stellglieder nacheinander eingestellt werden. Ist dies nicht erwünscht, so könnte gerade bei sehr breiten Streuern mit weit auseinander liegenden Streuscheiben, die eine gleichzeitige manuelle Verstellung der Stellglieder durch ihre räumliche Anordnung nicht zulassen, eine mechanische Kopplung zur gleichzeitigen Verstellung beider Stellglieder vorgesehen werden.

Eine sehr kostengünstige Ausführung ergibt sich dadurch, daß die Stellglieder als spannschloßartige Gewindespindeln ausgebildet sind, wie sie beispielsweise ähnlich bei Oberlenkern von Dreipunktgestängen Verwendung finden.

Bei der Verwendung von Hydraulikzylindern als Stellglieder kann durch Einsatz entsprechender Sensoren ein Regelkreis zum Erreichen gewünschter Einstellungen gebildet werden. Bei manuell zu verstellenden Stellgliedern sind vorzugsweise Skalen als Einstellhilfe den Stellgliedern zugeordnet. Dazu können zum Beispiel gegeneinander und ineinander verschiebbare Hülsen um ein Stellglied vorgesehen sein, die mit entsprechenden Markierungen zur Einstellung versehen sind und gleichzeitig das Stellglied vor äußerer Schmutzeinwirkung schützen.

Eine vorteilhafte Ausgestaltung zeichnet sich dadurch aus, daß als Begrenzungselemente zwei mit den Abschnitten zusammenwirkende Anschläge am Getriebegehäuse vorgesehen sind. Hiermit wird in einfacher Weise eine Begrenzung der Querverschiebbarkeit des Getriebegehäuses realisiert, so daß die Stellglieder lediglich die Längsverschiebung des Getriebegehäuses bestimmen. Die Anschläge treten automatisch immer dann in Wirkung, wenn beide Stellglieder ihre Einstellage erreicht haben.

Zweckmäßigerweise greifen die Anschläge innenseitig an den Abschnitten an. Dies gewährleistet eine voneinander unabhängige Einstellbarkeit der Stellglieder, da das Getriebegehäuse bei Verstellung eines Stellgliedes aus seiner normalerweise rechtwinkligen Quererstreckung zur Fahrtrichtung verschwenkt wird, was bei außen an den Abschnitten angreifenden Anschlägen zu einer Verspannung führen würde.

Um eine spielfreie Lagerung des Getriebegehäuses in Querrichtung zu gewährleisten, ist vorgesehen, daß die Anschläge federbelastet sind. Kontakrollen an den Anschlägen vermindern die Reibung und den Verschleiß.

Zur Justierung der Schleuderscheiben bezüglich der Ausläufe ist vorgesehen, daß die Anschläge einzeln, insbesondere quer zur Fahrtrichtung, verstellbar sind. So ist durch gleichgerichtetes Verschieben der Anschläge eine symmetrische Ausrichtung der Schleuderscheiben auf ihre Ausläufe möglich. Durch eine Verstellung eines Anschlages bzw. durch entgegengerichtetes Verschieben beider Anschläge erfolgt eine Einstellung der Spannung, die zwischen Rahmen und Getriebegehäuse wirkt.

Weiter ist zum Ausgleich von Fertigungstoleranzen, welche insbesondere die relative Ausrichtung beider Ausläufe zueinander betrifft, vorgesehen, daß wenigstens ein Boden mit seinem Auslauf in seiner Ebene verstellbar ist. Hierdurch kann eine Feinabstimmung des Abstandes der Ausläufe zu dem durch das starre Getriebegehäuse im allgemeinen maßgenauen Abstand der Schleuderscheiben erfolgen. Außerdem können durch Verschiebung eines Bodens in Fahrtrichtung die Ausläufe in paralleler Linie zu Anlenkpunkten des Streuers, welche der Aufnahme durch einen Schlepper dienen, ausgerichtet werden. Dies stellt bei nachfolgender Ausrichtung der Schleuderscheiben zu den Ausläufen ein symmetrisches Streuverhalten bezüglich der Fahrtrichtung sicher. Alle genannten Justierungen, wie auch beispielsweise eine Eichung der Skalen an den Stellgliedern, werden bevorzugt werkseitig vorgenommen.

Eine gleichmäßige Verteilung des Streugutes ist nur gewährleistet, wenn das Streugut aus dem Vorratsbehälter gleichmäßig ausläuft, was wiederum voraussetzt, daß das Streugut im Behälter fließfähig gehalten wird. Dies erfolgt in bekannter Weise durch Rührwerke, die das Streugut zumindest oberhalb der Ausläufe in Bewegung halten. Dabei ist auch bekannt, das Rührwerk von der Gelenkwelle her, die auch den Antrieb der Schleuderscheiben besorgt, anzutreiben.

Um eine einfache und kostengünstige Konstruktion zu erhalten, ist als weiteres wesentliches Merkmal der Erfindung vorgesehen, daß das Rührwerk mit dem Getriebezug an dessen Eingangsseite antriebsmäßig verbunden ist und die Antriebsverbindung mit dem Getriebegehäuse mitbewegbar ist. Somit ist die Antriebsverbindung zum Rührwerk unabhängig von der Position der Schleuderscheiben bzw. des Getriebegehäuses gewährleistet.

Eine sehr einfache Ausführung ergibt sich weiter dadurch, daß das Rührwerk durch einen oder mehrere über den Ausläufen oszillierende Rührfinger gebildet ist, wobei bevorzugt vorgesehen ist, daß die Rührfinger an einer horizontalen, sich quer zur Fahrtrichtung erstreckenden Welle angeordnet sind. Auf diese Weise sind die Rührfinger über beiden Ausläufen mittels einer gemeinsamen Welle antreibbar.

Eine vorteilhafte Ausführung ergibt sich dadurch, daß die Rührfinger über einen Exzenter angetrieben sind. Hiermit ist nicht nur ein einfacher Antrieb für die Rührfinger verwirklicht, sondern es kann das Exzenterglied insbesondere auch so ausgestaltet sein, daß es den Verstellweg des Getriebes aufnimmt, ohne daß die Rührfinger gegenüber den Ausläufen nennenswert verlagert werden und sich demzufolge auch ihre Bewegungsbahn kaum verlagert.

Nachstehend ist die Erfindung anhand einer in der Zeichnung wiedergegebenen Ausführungsform beschrieben. Es zeigen:
- Figur 1: eine Seitenansicht eines Schleuderstreuers entgegen der Fahrtrichtung;
- Figur 2: eine Seitenansicht des Schleuderstreuers quer zur Fahrtrichtung und
- Figur 3: eine Draufsicht auf den Schleuderstreuer ohne Vorratsbehälter.

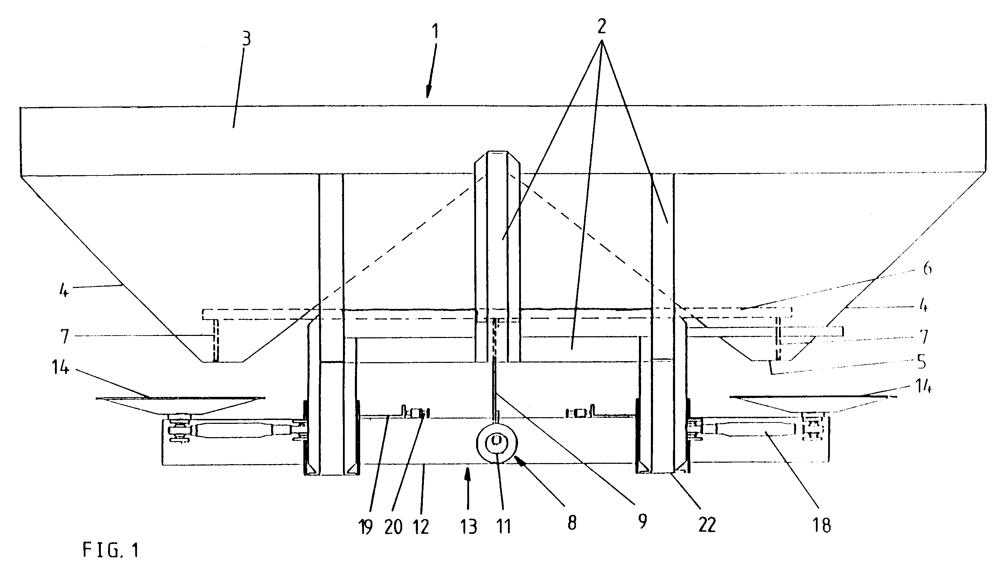

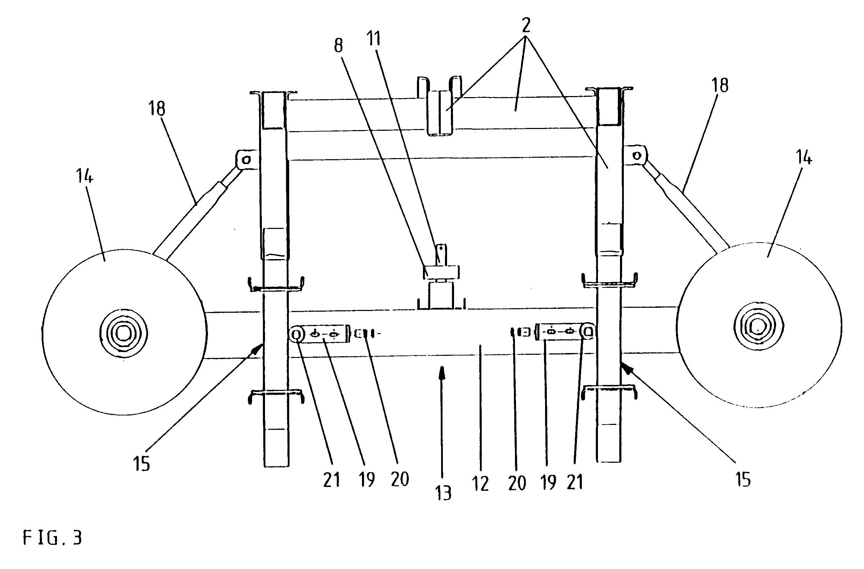

Der Schleuderstreuer 1 nach Figur 1 weist einen Rahmen 2 auf, der einen Vorratsbehälter 3 trägt. Der Vorratsbehälter 3 bildet zwei Trichter 4, die jeweils in einem Boden 5 mit einem einstellbaren, nicht dargestellten Auslauf enden. Im unteren Bereich der Trichter 4 ist eine horizontale Welle 6 gelagert, an denen Rührfinger 7 innerhalb der Trichter 4 angeordnet sind, die bis zu den Ausläufen reichen. Mit Hilfe eines Exzenters 8, einer Kurbelstange 9 und einer Kurbel 10 ist die Welle 6 von der nicht dargestellten Gelenkwelle eines Schleppers antreibbar. Der Exzenter 8 sitzt zu diesem Zweck auf einem Gelenkwellenanschlußstück 11. Das Gelenkwellenanschlußstück 11 ist in Fahrtrichtung vor einem Getriebezug 13 gelagert (Figur 3), dessen Getriebegehäuse 12 vom Rahmen 2 gehalten ist. Das Getriebegehäuse 12 erstreckt sich im wesentlichen quer zur Fahrtrichtung. Das Gelenkwellenanschlußstück 11 bildet die Eingangsseite des Getriebezuges 13, der dem Antrieb von zwei Schleuderscheiben 14 dient. Das Getriebegehäuse 12 lagert die um eine vertikale Achse drehbaren Schleuderscheiben 14 unterhalb der Ausläufe des Vorratsbehälters 3.

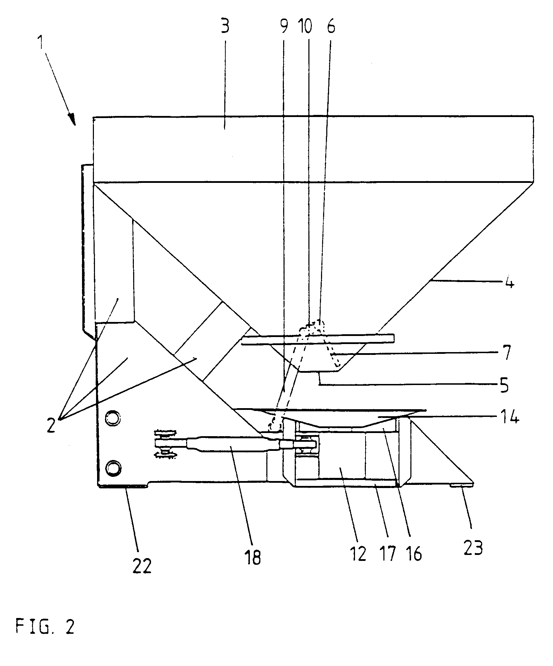

Der Rahmen 2 bildet mit parallelen Abschnitten 15 eine Führung für das Getriebegehäuse 12, so daß dieses in einer Horizontalebene verschiebbar ist (Figur 3). Die Abschnitte 15 bestehen aus einem oberen Trägerteil 16 und einem unteren Trägerteil 17 (Figur 2), zwischen denen das Getriebegehäuse 12 geführt ist. Um eine spielfreie Lagerung des Getriebegehäuses 12 zwischen den Trägerteilen 16 und 17 zu gewährleisten, können nicht dargestellte Gleitleisten, z. B. aus Kunststoff, zwischen einem oder beiden Trägerteilen 16, 17 und dem Getriebegehäuse vorgesehen sein. Diese dienen einerseits zum Vorspannen der Führung, andererseits zur Reduzierung der Reibung.

Im Bereich der Lagerung der Schleuderscheiben 14 greifen Stellglieder 18 am Getriebegehäuse 12 an, die sich im vorderen Bereich des Rahmens 2 abstützen. Die Stellglieder 18 sind als spannschloßartige Gewindespindeln ausgeführt, wie sie auch als Oberlenker in der Landtechnik Verwendung finden.

Die Abstützung des Getriebegehäuses 12 quer zur Fahrtrichtung ist durch Anschläge 19 realisiert, die auf dem Getriebegehäuse 12 angeordnet sind und innenseitig an den Abschnitten 15 des Rahmens 2 angreifen (Figur 3). Die Anschläge 19 sind mit Justierschrauben 20 auf dem Getriebegehäuse 12 verschiebbar und weisen Kontaktrollen 21 auf, welche an den Abschnitten 15 anliegen.

Im unteren Bereich ist der Rahmen 2 mit Abstellfüßen 22 und 23 versehen. Wichtig ist eine stabile Ausführung des Rahmens 2, um dem rauhen Betrieb und den Beanspruchungen beim Aufnehmen und Abstellen des Schleuderstreuers 1 standzuhalten.

Der Schleuderstreuer 1 wird mit seinem Rahmen 2 üblicherweise durch den bekannten Dreipunktanbau vom Schlepper aufgenommen. Vom Zapfwellenanschluß des Schleppers wird dann über eine Gelenkwelle zum Gelenkwellenanschlußstück 11 eine Antriebsverbindung hergestellt. In der Regel wird vor dem Streubetrieb zur Eichung des Streuers 1 eine "Abdrehprobe" vorgenommen. Hierzu wird wenigstens eine Schleuderscheibe 14 abgenommen, ein Auffangbehälter unter dem entsprechenden Auslauf angeordnet und das Abdrehen in üblicher Weise durchgeführt.

Nach erfolgter Eichung wird ein bestimmter Scheibensatz je nach gewünschter Arbeitsbreite montiert. So ist beispielsweise ein Paar Schleuderscheiben 14 für eine Arbeitsbreite von 12 bis 18 m und ein weiteres Paar für eine Arbeitsbreite von 20 bis 28 m vorgesehen. Anschließend erfolgt eine Justierung des Aufgabepunktes, das heißt es wird die Relativlage zwischen Auslauf und Schleuderscheibe 14 durch die Stellglieder 18 eingestellt. Dazu können am Stellglied 18 oder an Hilfsskalen entsprechende Markierungen vorgesehen sein, um die erforderliche Stellung leicht erreichen zu können. Dadurch, daß die Stellglieder 18 im Bereich der Schleuderscheiben 14 am Getriebegehäuse 12 angreifen, kann der Aufgabepunkt für jede Schleuderscheibe unabhängig, jedoch sehr exakt eingestellt werden. Eine ungleiche Einstellung ist zwar in den meisten Fällen gerade nicht erwünscht, da allgemein ein auf beiden Seiten in Fahrtrichtung symmetrisches Streubild gewährleistet sein soll, im Falle des Grenzstreuens, wo am Feldrand ein möglichst steilflankiges Streubild erhalten werden soll, kann dies jedoch durchaus vorteilhaft sein. In jeder Stellung sorgen die Anschläge 19 dafür, daß das Getriebegehäuse 12 quer zur Fahrtrichtung bezüglich des Rahmens 2 festgelegt ist. Um eine spielfreie Festlegung zu gewährleisten, können die Anschläge 19 über die Justierschrauben 20 vorgespannt werden. Gegebenenfalls können auch die auf die Abschnitte 15 wirkenden Kontaktrollen 21 federbelastet sein.

Beim Einsatz des Düngerstreuers beschreiben die vom Exzenter 8 angetriebenen Rührfinger 7 eine oszillierende Bewegung über den Ausläufen. Dadurch wird das Streugut im Vorratsbehälter 3 oberhalb der Ausläufe immer fließfähig gehalten und ein gleichmäßiger Volumenstrom durch die Ausläufe gewährleistet. Von den Ausläufen im Boden 5 der Trichter 4 des Vorratsbehälters 3 fällt das Streugut auf die Schleuderscheibe 14 und wird mit Hilfe nicht dargestellter Wurfflügel auf der Schleuderscheibe 14 nach außen geschleudert. Bei spiegelsymmetrischer Anordnung des Aufgabepunktes an beiden Schleuderscheiben und gleicher Drehzahl der entgegengesetzt rotierenden Schleuderscheiben 14 ist ein symmetrisches Streubild gewährleistet.

Bei Verschiebung des Getriebegehäuses 12 zur Verlagerung der Aufgabepunkte wird das Gelenkwellenanschlußstück 11 mit dem Exzenter 8 mitbewegt. Diese Lageänderung wird durch die Kurbel 10 an der Welle 6 weitgehend ausgeglichen, so daß eine einwandfreie Wirkung des Rührwerks trotz der Verlagerung ihrer Antriebsverbindung zur Gelenkwelle gegeben ist.

## Patentansprüche

1. Schleuderstreuer für rieselfähiges Streugut, insbesondere Dünger, der von einem Schlepper aufgenommen und antriebsmäßig mit dessen Zapfwelle über eine Gelenkwelle verbunden ist, mit einem Rahmen, einem von diesem aufgenommenen Vorratsbehälter mit wenigstens zwei einstellbaren Ausläufen beiderseits der Fahrtrichtung und je einer darunter angeordneten Schleuderscheibe, wobei die Schleuderscheiben über einen gemeinsamen mechanischen Getriebezug gegensinnig von der Gelenkwelle angetrieben sind und der Getriebezug ein die Schleuderscheiben lagerndes Getriebegehäuse aufweist, **dadurch gekennzeichnet,** daß das Getriebegehäuse (12) in einer Horizontalebene frei bewegbar am Rahmen (2) geführt ist, und daß zur Einstellung des die Relativlage zwischen jedem Auslauf und der ihr zugeordneten Schleuderscheibe (14) bestimmenden Aufgabepunktes zwei jeweils am Rahmen (2) und am Getriebegehäuse (12) an unterschiedlichen Stellen angreifende Stellglieder (18) und zumindest ein Begrenzungselement vorgesehen sind.

2. Schleuderstreuer nach Anspruch 1, dadurch gekennzeichnet, daß wenigstens zwei Paar von Schleuderscheiben (14) zur Veränderung der Arbeitsbreite vorgesehen sind.

3. Schleuderstreuer nach Anspruch 1 oder 2, dadurch gekennzeichnet, daß der Rahmen (2) das Getriebegehäuse (12) führende Abschnitte (15) aufweist, die zwischen den Schleuderscheiben (14) angeordnet sind.

4. Schleuderstreuer nach einem der vorangehenden Ansprüche, dadurch gekennzeichnet, daß die Abschnitte (15) zwei parallele, etwa in Fahrtrichtung verlaufende Führungen bilden.

5. Schleuderstreuer nach einem der vorangehenden Ansprüche, dadurch gekennzeichnet, daß die das Getriebegehäuse (12) führenden Abschnitte (15) von unteren Schenkeln des Rahmens (2) gebildet sind.

6. Schleuderstreuer nach einem der vorangehenden Ansprüche, dadurch gekennzeichnet, daß die Führungen quer zur Führungsebene vorgespannt sind.

7. Schleuderstreuer nach einem der vorangehenden Ansprüche, dadurch gekennzeichnet, daß das Getriebegehäuse (12) mittels der Stellglieder (18) im wesentlichen in Fahrtrichtung einstellbar und mittels des Begrenzungselementes quer dazu festgelegt ist.

8. Schleuderstreuer nach einem der vorangehenden Ansprüche, dadurch gekennzeichnet, daß die Stellglieder (18) jeweils im Bereich einer Schleuderscheibe (14) am Getriebegehäuse (12) angreifen.

9. Schleuderstreuer nach einem der vorangehenden Ansprüche, dadurch gekennzeichnet, daß die Stellglieder (18) einen Winkel von maximal 45° zur Fahrtrichtung einnehmen.

10. Schleuderstreuer nach einem der vorangehenden Ansprüche, dadurch gekennzeichnet, daß die Stellglieder (18) stufenlos einstellbar sind.

11. Schleuderstreuer nach einem der vorangehenden Ansprüche, dadurch gekennzeichnet, daß die Stellglieder (18) unabhängig voneinander einstellbar sind.

12. Schleuderstreuer nach einem der vorangehenden Ansprüche, dadurch gekennzeichnet, daß die Stellglieder (18) als spannschloßartige Gewindespindeln ausgebildet sind.

13. Schleuderstreuer nach einem der vorangehenden Ansprüche, dadurch gekennzeichnet, daß den Stellgliedern (18) Skalen als Einstellhilfe zugeordnet sind.

14. Schleuderstreuer nach einem der vorangehenden Ansprüche, dadurch gekennzeichnet, daß als Begrenzungselemente zwei mit den die Führungen aufweisenden Abschnitten (15) des Rahmens zusammenwirkende Anschläge (19) am Getriebegehäuse (12) vorgesehen sind.

15. Schleuderstreuer nach einem der vorangehenden Ansprüche, dadurch gekennzeichnet, daß die Anschläge (19) innenseitig an den Abschnitten (15) angreifen.

16. Schleuderstreuer nach einem der vorangehenden Ansprüche, dadurch gekennzeichnet, daß die Anschläge (19) federbelastet sind.

17. Schleuderstreuer nach einem der vorangehenden Ansprüche, dadurch gekennzeichnet, daß die Anschläge (19) Kontaktrollen (21) aufweisen.

18. Schleuderstreuer nach einem der vorangehenden Ansprüche, dadurch gekennzeichnet, daß die Anschläge (19) einzeln, insbesondere quer zur Fahrtrichtung verstellbar sind.

19. Schleuderstreuer nach einem der vorangehenden Ansprüche mit zwei Böden, von denen jeder einen Auslauf aufweist, dadurch gekennzeichnet, daß wenigstens ein Boden (5) mit seinem Auslauf in seiner Ebene verstellbar ist.

20. Schleuderstreuer nach einem der vorangehenden Ansprüche mit wenigstens einem im Vorratsbehälter angeordneten und von der Gelenkwelle angetriebenen Rührwerk, dadurch gekennzeichnet, daß das Rührwerk mit dem Getriebezug (13) an dessen Eingangsseite antriebsmäßig verbunden ist und die Antriebsverbindung (8, 9, 10) mit dem Getriebegehäuse (12) mitbewegbar ist.

21. Schleuderstreuer nach Anspruch 20, dadurch gekennzeichnet, daß das Rührwerk durch einen oder mehrere über den Ausläufen oszillierende Rührfinger (7) gebildet ist.

22. Schleuderstreuer nach Anspruch 21, dadurch gekennzeichnet, daß die Rührfinger (7) an einer horizontalen, sich quer zur Fahrtrichtung erstreckenden Welle (6) angeordnet sind.

23. Schleuderstreuer nach Anspruch 21 oder 22, dadurch gekennzeichnet, daß die Rührfinger (7) über einen Exzenter (8) angetrieben sind.

## Claims

1. Centrifugal spreader for free-flowing material for spreading, particularly fertilizer, which is received by a tractor and is drive-connected to its power take-off shaft by means of a propeller shaft, having a frame, a storage container received by the latter and having at least two adjustable outlets on either side of the direction of travel and in each case one centrifugal disk placed below the same, the centrifugal disks being driven in opposite directions by the propeller shaft by means of a common, mechanical gear train and the latter has a gear box for the centrifugal disks, characterized in that the gear box (12) is freely movably guided in a horizontal plane on the frame (2) and that for adjusting the relative position between each outlet and the loading point determining the centrifugal disk (14) associated therewith are provided two control elements (18) acting at different points on the frame (2) and on the gear box (12), as well as at least one limiting element.

2. Centrifugal spreader according to claim 1, characterized in that there are at least two pairs of centrifugal disks (14) for modifying the working width.

3. Centrifugal spreader according to claim 1 or 2, characterized in that the frame (2) has sections (15) guiding the gear box (12) and which are positioned between the centrifugal disks (14).

4. Centrifugal spreader according to one of the preceding claims, characterized in that the sections (15) form two parallel guides running roughly in the direction of travel.

5. Centrifugal spreader according to one of the preceding claims, characterized in that the sections (15) guiding the gear box (12) are formed by the lower legs of the frame (2).

6. Centrifugal spreader according to one of the preceding claims, characterized in that the guides are pretensioned transversely to the guidance plane.

7. Centrifugal spreader according to one of the preceding claims, characterized in that the gear box (12) is adjustable substantially in the direction of travel by means of the control elements (18) and is fixed transversely thereto by means of the limiting element.

8. Centrifugal spreader according to one of the preceding claims, characterized in that the control elements (18) act on the gear box (12) in each case in the vicinity of a centrifugal disk (14).

9. Centrifugal spreader according to one of the preceding claims, characterized in that the control elements (18) assume an angle of max 45° to the direction of travel.

10. Centrifugal spreader according to one of the preceding claims, characterized in that the control elements (18) are continuously adjustable.

11. Centrifugal spreader according to one of the preceding claims, characterized in that the control elements (18) are adjustable independently of one another.

12. Centrifugal spreader according to one of the preceding claims, characterized in that the control elements (18) are constructed as turnbuckle-like threaded spindles.

13. Centrifugal spreader according to one of the preceding claims, characterized in that scales as setting aids are associated with the control elements (18).

14. Centrifugal spreader according to one of the preceding claims, characterized in that as limiting elements are provided two stops (19) on the gear box (15) cooperating with the frame sections (15) having the guides.

15. Centrifugal spreader according to one of the preceding claims, characterized in that the stops (19) act on the insides of the sections (15).

16. Centrifugal spreader according to one of the preceding claims, characterized in that the stops (19) are spring-loaded.

17. Centrifugal spreader according to one of the preceding claims, characterized in that the stops (19) have contact rolls (21).

18. Centrifugal spreader according to one of the preceding claims, characterized in that the stops (19) are individually adjustable, in particular transversely to the direction of travel.

19. Centrifugal spreader according to one of the preceding claims with two bases, whereof each has an outlet, characterized in that at least one base with its outlet is adjustable in its plane.

20. Centrifugal spreader according to one of the preceding claims with at least one agitator positioned in the storage container and driven by the propeller shaft, characterized in that the agitator is drive-connected to the gear train 913) at its inlet side and the drive connection (8, 9, 10) is movable together with the gear box (12).

21. Centrifugal spreader according to claim 20, characterized in that the agitator is formed by one or more agitating fingers (7) oscillating over the outlets.

22. Centrifugal spreader according to claim 21, characterized in that the agitating fingers (7) are located on a horizontal shaft (6) extending transversely to the direction of travel.

23. Centrifugal spreader according to claim 21 or 22, characterized in that the agitating fingers (7) are driven by means of an eccentric (8).

## Revendications

1. Epandeur centrifuge pour un matériau d'épandage susceptible de s'écouler, notamment de l'engrais, épandeur porté par un tracteur et en liaison motrice avec la prise de force de ce dernier par l'intermédiaire d'un arbre articulé, et comprenant un châssis, un réservoir de stockage porté par ce dernier présentant au moins deux ouvertures d'écoulement réglables disposées des deux côtés de la direction d'avance, et un disque d'épandage disposé sous chacune d'elles, les disques d'épandage étant entraînés en sens contraires à partir de l'arbre articulé par l'intermédiaire d'un train mécanique d'engrenages commun, ce train d'engrenages présentant un carter portant les disques d'épandage, caractérisé en ce que le carter (12) est mobile librement en coulissement dans un plan horizontal sur le châssis (2), et en ce que, en vue du réglage du point de déversement définissant la position relative entre chacune des ouvertures d'écoulement et le disque qui lui est associé, l'épandeur comprend deux bras de réglage (18) qui agissent chacun respectivement sur le châssis (2) et sur le carter (12) en des emplacements différents, ainsi qu'au moins un élément limiteur.

2. Epandeur centrifuge selon la revendication 1, caractérisé en ce qu'il comporte au moins deux paires de disques d'épandage (14) en vue de la modification de la largeur d'épandage.

3. Epandeur centrifuge selon l'une des revendications 1 ou 2, caractérisé en ce que le châssis (2) présente des éléments de guidage (15) pour le carter (12), qui sont disposés entre les disques d'épandage (14).

4. Epandeur centrifuge selon l'une des revendications précédentes, caractérisé en ce que les éléments de guidage (15) forment deux guides parallèles s'étendant approximativement dans la direction d'avance.

5. Epandeur centrifuge selon l'une des revendications précédentes, caractérisé en ce que les éléments de guidage (15) du carter (12) sont formées par des longerons inférieurs du châssis (2).

6. Epandeur centrifuge selon l'une des revendications précédentes, caractérisé en ce que les guides sont précontraints transversalement au plan de guidage.

7. Epandeur centrifuge selon l'une des revendications précédentes, caractérisé en ce que le carter (12) est réglable essentiellement dans la direction d'avance au moyen des bras de réglage (18), et est bloqué transversalement à la direction d'avance au moyen de l'élément limiteur.

8. Epandeur centrifuge selon l'une des revendications précédentes, caractérisé en ce que les bras de réglage (18) agissent sur le carter (12), chacun au voisinage d'un des disques d'épandage (14).

9. Epandeur centrifuge selon l'une des revendications précédentes, caractérisé en ce que les bras de réglage (18) présentent un angle maximal de 45° par rapport à la direction d'avance.

10. Epandeur centrifuge selon l'une des revendications précédentes, caractérisé en ce que les bras de réglage (18) sont réglables de manière continue.

11. Epandeur centrifuge selon l'une des revendications précédentes, caractérisé en ce que les bras de réglage sont réglables indépendamment l'un de l'autre.

12. Epandeur centrifuge selon l'une des revendications précédentes, caractérisé en ce que les bras de réglage (18) sont conformés en broches filetées à manchon de serrage.

13. Epandeur centrifuge selon l'une des revendications précédentes, caractérisé en ce que des échelles sont associées aux bras de réglage (18) pour faciliter le réglage.

14. Epandeur centrifuge selon l'une des revendications précédentes, caractérisé en ce que les éléments limiteurs sont formés par deux butées (19) sur le carter (12), qui coopèrent avec les éléments de guidage (15) du châssis présentant les guides.

15. Epandeur centrifuge selon l'une des revendications précédentes, caractérisé en ce que les butées (19) agissent sur les éléments de guidage (15) du côté intérieur de ceux-ci.

16. Epandeur centrifuge selon l'une des revendications précédentes, caractérisé en ce que les butées (19) sont soumises à l'action d'un ressort.

17. Epandeur centrifuge selon l'une des revendications précédentes, caractérisé en ce que les butées (19) comportent des galets de contact (21).

18. Epandeur centrifuge selon l'une des revendications précédentes, caractérisé en ce que les butées (19) sont réglables individuellement, notamment transversalement à la direction d'avance.

19. Epandeur centrifuge selon l'une des revendications précédentes, comportant deux fonds (5) dont chacun présente une ouverture d'écoulement, caractérisé en ce qu'un fond (5) au moins est réglable dans son plan par son ouverture d'écoulement.

20. Epandeur centrifuge selon l'une des revendications précédentes, comprenant au moins un organe d'agitation disposé dans le réservoir de stockage et actionné par l'arbre articulé, caractérisé en ce que l'organe d'agitation est relié au train d'engrenage (13) du côté de l'entrée de celui-ci, et la liaison d'actionnement (8, 9, 10) est déplaçable conjointement avec le carter (12).

21. Epandeur centrifuge selon la revendication 20, caractérisé en ce que l'organe d'agitation est formé par un ou plusieurs doigts d'agitation (7) oscillants au-dessus des ouvertures d'écoulement.

22. Epandeur centrifuge selon la revendication 21, caractérisé en ce que les doigts d'agitation (7) sont disposés sur un arbre (6) horizontal s'étendant transversalement à la direction d'avance.

23. Epandeur centrifuge selon l'une des revendications 21 ou 22, caractérisé en ce que les doigts d'agitation (7) sont actionnés par l'intermédiaire d'un excentrique (8).
